# EUROPEAN PATENT APPLICATION

(11) **EP 4 236 430 A1**
(43) Date of publication of application: **30.08.2023**
(21) Application number: 22852159.7
(22) Date of filing: 02.08.2022
(51) Int. Cl.: H04W 24/02

(54) **NETWORK INFORMATION OPENING METHOD AND APPARATUS, ELECTRONIC DEVICE, AND STORAGE MEDIUM**

(30) Priority: 06.08.2021 CN 202110902447
(71) Applicant: Tencent Technology (Shenzhen) Company Limited, Shenzhen, Guangdong, 518057 (CN)
(72) Inventor: ZHANG, Zhuoyun, Shenzhen, Guangdong 518057 (CN)
(74) Representative: Gunzelmann, Rainer
(86) International application number: PCT/CN2022/109632
(87) International publication number: WO 2023/011447

(57) **Abstract**

A network information opening method and apparatus, an electronic device, and a storage medium. The network information opening method is executed by the electronic device, and comprises: sending a wireless network information opening request to a network opening function network element, wherein the wireless network information opening request carries the category information of target wireless network information, so that the network opening function network element transmits the category information to a base station, and the base station obtains the target wireless network information according to the category information and sends the target wireless network information to the network opening function network element; and obtaining the target wireless network information returned by the network opening function network element.

## Description

### RELATED APPLICATION

This disclosure claims priority to Chinese Patent Application No. 202110902447.8, entitled "NETWORK INFORMATION EXPOSURE METHOD AND RELATED DEVICE" and filed with the China Patent Office on August 6, 2021.

### FIELD OF THE TECHNOLOGY

This disclosure relates to the field of communications technologies, and in particular, to a network information exposure method and apparatus, an electronic device, and a storage medium.

### BACKGROUND OF THE DISCLOSURE

In the related art, network capabilities that can be exposed do not include wireless network information, so capability exposure of the wireless network information cannot be realized.

Therefore, there is a need for a method of realizing the capability exposure of the wireless network information.

The information disclosed in the Background above is intended only to enhance understanding of the background of this disclosure.

### SUMMARY

Embodiments of this disclosure provide a network information exposure method and apparatus, an electronic device, and a computer-readable storage medium, which can realize exposure of wireless network information.

Other features and advantages of this disclosure become obvious through the following detailed descriptions or partially learned through the practice of this disclosure.

An embodiment of this disclosure provides a network information exposure method, performed by an electronic device, the method including: sending a wireless network information exposure request to a network exposure function (NEF) network element, the wireless network information exposure request carrying category information of target wireless network information, so that the NEF network element transmits the category information to a base station, and the base station acquires the target wireless network information according to the category information and sends the target wireless network information to the NEF network element; and acquiring the target wireless network information returned by the NEF network element.

An embodiment of this disclosure provides a network information exposure method, performed by an electronic device, the method including: receiving a wireless network information exposure request sent by an application function (AF) network element, the wireless network information exposure request carrying category information of target wireless network information; sending the category information to an access and mobility management function (AMF) network element so that the AMF network element sends the category information to a base station, and the base station acquires the target wireless network information according to the category information and sends the target wireless network information to the AMF network element; receiving the target wireless network information from the AMF network element; and sending the target wireless network information to the AF network element.

An embodiment of this disclosure provides a network information exposure method, performed by an electronic device, the method including: receiving category information of target wireless network information from a NEF network element, the NEF network element receiving a wireless network information exposure request from an AF network element, the wireless network information exposure request carrying the category information; sending the category information to a base station so that the base station acquires the target wireless network information according to the category information; receiving the target wireless network information returned by the base station; and forwarding the target wireless network information to the NEF network element so that the NEF network element sends the target wireless network information to the AF network element.

An embodiment of this disclosure provides a network information exposure method, performed by an electronic device, the method including: receiving category information of target wireless network information from an AMF network element, the AMF network element receiving the category information from an NEF network element, the NEF network element receiving a wireless network information exposure request from an AF network element, the wireless network information exposure request carrying the category information; acquiring the target wireless network information according to the category information; and sending the target wireless network information to the AMF network element so that the AMF network element forwards the target wireless network information to the NEF network element, and the NEF network element sends the target wireless network information to the AF network element.

An embodiment of this disclosure provides a network information exposure apparatus, including: a wireless network information exposure request sending unit configured to send a wireless network information exposure request to a NEF network element, the wireless network information exposure request carrying category information of target wireless network information, so that the NEF network element transmits the category information to a base station, and the base station acquires the target wireless network information according to the category information and sends the target wireless network information to the NEF network element; and a target wireless network information acquisition unit configured to acquire the target wireless network information returned by the NEF network element.

An embodiment of this disclosure provides a network information exposure apparatus, including: a wireless network information exposure request receiving unit configured to receive a wireless network information exposure request sent by an AF network element, the wireless network information exposure request carrying category information of target wireless network information; a target wireless network information category information forwarding unit configured to send the category information to an AMF network element so that the AMF network element sends the category information to a base station, and the base station acquires the target wireless network information according to the category information and sends the target wireless network information to the AMF network element; a target wireless network information transfer unit configured to receive the target wireless network information from the AMF network element; and a target wireless network information forwarding unit configured to send the target wireless network information to the AF network element.

An embodiment of this disclosure provides a network information exposure apparatus, including: a target wireless network information category information determining unit configured to receive category information of target wireless network information from a NEF network element, the NEF network element receiving a wireless network information exposure request from an AF network element, the wireless network information exposure request carrying the category information; a target wireless network information category information transmission unit configured to send the category information to a base station so that the base station acquires the target wireless network information according to the category information; a target wireless network information receiving unit configured to receive the target wireless network information returned by the base station; and a target wireless network information transmission unit configured to forward the target wireless network information to the NEF network element so that the NEF network element sends the target wireless network information to the AF network element.

An embodiment of this disclosure provides a network information exposure apparatus, including: a target wireless network information category information acquisition unit configured to receive category information of target wireless network information from an AMF network element, the AMF network element receiving the category information from an NEF network element, the NEF network element receiving a wireless network information exposure request from an AF network element, the wireless network information exposure request carrying the category information; a target wireless network information extraction unit configured to acquire the target wireless network information according to the category information; and a target wireless network information sending unit configured to send the target wireless network information to the AMF network element so that the AMF network element forwards the target wireless network information to the NEF network element, and the NEF network element sends the target wireless network information to the AF network element.

An embodiment of this disclosure provides a computer-readable storage medium storing a computer program, the program, when executed by a processor, implementing the network information exposure method as described in the foregoing embodiments.

An embodiment of this disclosure provides an electronic device, including: one or more processors; and a storage apparatus configured to store one or more programs, the one or more programs, when executed by the one or more processors, causing the electronic device to implement the network information exposure method as described in the foregoing embodiments.

According to an aspect of this disclosure, a computer program product or computer program is provided, the computer program product or computer program including a computer instruction, the computer instruction being stored in a computer-readable storage medium. A processor of a computer device reads the computer instruction from the computer-readable storage medium, and the processor executes the computer instruction to cause the computer device to perform the method provided in the above various optional implementations.

It is to be understood that, the foregoing general descriptions and the following detailed descriptions are merely for illustration and explanation purposes and cannot limit this disclosure.

### BRIEF DESCRIPTION OF THE DRAWINGS

FIG. 1 is a schematic diagram of an architecture of 5G network capability exposure in a related technology.
FIG. 2 is a schematic flowchart of a network information exposure method according to an embodiment of this disclosure.
FIG. 3 is a schematic interaction diagram of a network information exposure method according to an embodiment of this disclosure.
FIG. 4 is a schematic flowchart of a network information exposure method according to another embodiment of this disclosure.
FIG. 5 is a schematic flowchart of a network information exposure method according to yet another embodiment of this disclosure.
FIG. 6 is a schematic flowchart of a network information exposure method according to another embodiment of this disclosure.
FIG. 7 is a schematic block diagram of a network information exposure apparatus according to an embodiment of this disclosure.
FIG. 8 is a schematic block diagram of a network information exposure apparatus according to another embodiment of this disclosure.
FIG. 9 is a schematic block diagram of a network information exposure apparatus according to yet another embodiment of this disclosure.
FIG. 10 is a schematic block diagram of a network information exposure apparatus according to another embodiment of this disclosure.
FIG. 11 is a schematic block diagram of an electronic device according to an embodiment of this disclosure.

### DESCRIPTION OF EMBODIMENTS

Exemplary implementations will now be described more thoroughly with reference to the accompanying drawings. However, exemplary implementations may be implemented in multiple forms, and it is not to be understood as being limited to the examples described herein. Conversely, the implementations are provided to make this disclosure more comprehensive and complete, and comprehensively convey the idea of the exemplary implementations to a person skilled in the art.

In addition, the described features, structures or characteristics may be combined in one or more embodiments in any appropriate manner. In the following descriptions, a lot of specific details are provided to give a comprehensive understanding of the embodiments of this disclosure. However, a person skilled in the art is to be aware that, the technical solutions in this disclosure may be implemented without one or more of the particular details, or another method, unit, apparatus, or step may be used. In other cases, well-known methods, apparatuses, implementations, or operations are not shown or described in detail, in order not to obscure the aspects of this disclosure.

The block diagrams shown in the accompanying drawings are merely functional entities and do not necessarily correspond to physically independent entities. That is, the functional entities may be implemented in a software form, or in one or more hardware modules or integrated circuits, or in different networks and/or processor apparatuses and/or microcontroller apparatuses.

The flowcharts shown in the accompanying drawings are merely exemplary descriptions, do not need to include all content and operations/steps, and do not need to be performed in the described orders either. For example, some operations/steps may be further divided, while some operations/steps may be combined or partially combined. Therefore, an actual execution order may change according to an actual case.

Particularly, according to an embodiment of this disclosure, the processes described in the following by referring to the flowcharts may be implemented as computer software programs. For example, an embodiment of this disclosure includes a computer program product. The computer program product includes a computer program carried on a computer-readable storage medium, and the computer program includes program code used for performing the methods shown in the flowcharts.

The computer-readable storage medium according to this disclosure may be a computer-readable signal medium or a computer-readable storage medium or any combination thereof. The computer-readable storage medium may be, for example, but is not limited to, an electric, magnetic, optical, electromagnetic, infrared, or semi-conductive system, apparatus, or component, or any combination thereof. A more specific example of the computer-readable storage medium may include, but is not limited to, an electrical connection having one or more wires, a portable computer magnetic disk, a hard disk, a random access memory (RAM), a read-only memory (ROM), an erasable programmable read only memory (EPROM, or a flash memory), an optical fiber, a compact disk read-only memory (CD-ROM), an optical storage device, a magnetic storage device, or any appropriate combination thereof. In this disclosure, the computer-readable storage medium may be any tangible medium containing or storing a program, and the program may be used by or used in combination with an instruction execution system, an apparatus, or a device. In this disclosure, the computer-readable signal medium may include a data signal being in a baseband or propagated as a part of a carrier wave, the data signal carrying computer-readable program code. The data signal propagated in such a way may assume a plurality of forms, including, but not limited to, an electromagnetic signal, an optical signal, or any appropriate combination thereof. The computer-readable signal medium may further be any computer-readable storage medium in addition to a computer-readable storage medium. The computer-readable storage medium may send, propagate, or transmit a program that is used by or used in conjunction with an instruction execution system, an apparatus, or a device. The program code included in the computer-readable storage medium may be transmitted by using any appropriate medium, including but not limited to, wireless, wire, optical cable, radio frequency (RF) media, and the like, or any appropriate combination thereof.

The flowcharts and block diagrams in the accompanying drawings illustrate possible system architectures, functions, and operations that may be implemented by a method, an apparatus, and a computer program product according to various embodiments of this disclosure. In this regard, each box in a flowchart or a block diagram may represent a module, a program segment, or a part of code. The module, the program segment, or the part of code includes one or more executable instructions used for implementing designated logic functions. In some alternative implementations, functions annotated in boxes may occur in a sequence different from that annotated in the accompanying drawings. For example, actually two boxes shown in succession may be performed basically in parallel, and sometimes the two boxes may be performed in a reverse sequence. This is determined by a related function. It is to be further noted that, each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

A related unit described in the embodiments of this disclosure may be implemented in a software manner, or may be implemented in a hardware manner, and the unit described may also be set in a processor. Names of the units do not constitute a limitation on the units in a specific case.

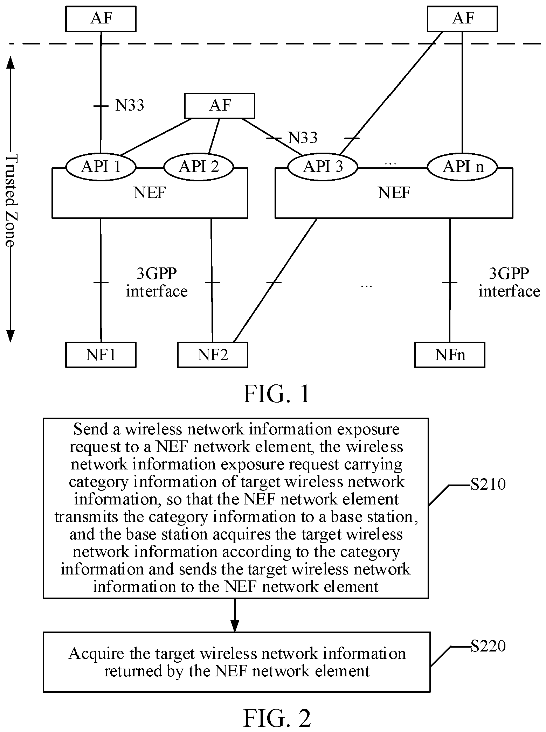

According to another aspect, this disclosure further provides a computer-readable storage medium. The computer-readable storage medium may be included in the electronic device described in the foregoing embodiments, or may exist alone without being incorporated into the electronic device. The computer-readable storage medium carries one or more programs. The one or more programs, when executed by the electronic device, cause the electronic device to implement the method as described in the following embodiments. For example, the electronic device may implement various steps shown in FIG. 2 or FIG. 3 or FIG. 4 or FIG. 5 or FIG. 6.

FIG. 1 is a schematic diagram of an architecture of 5G network capability exposure.

In the diagram of the architecture of capability exposure shown in FIG. 1, an NEF network element interacts with an AF network element through an N33 interface, acquires a capability call request of an AF, and exposes corresponding information to the AF according to the capability call request. An NEF interacts with other NFs (such as NF1 and NF2 to NFn shown in FIG. 1, where n is a positive integer greater than or equal to 1) on a control plane of a 5G core network through service-based interfaces to acquire specific network information required by the AF.

In the solution shown in FIG. 1, a network capability is exposed to the AF through the NEF. However, network capabilities that can be currently exposed do not include wireless network information, so capability exposure of the wireless network information cannot be realized.

In addition, in multi-access edge computing (MEC) enhancement, an issue of low-latency network information exposure is raised. Some network information, such as network congestion information or a real-time user-plane latency, needs to be exposed to an application server in real time. Then, the application server may perform application-layer processing based on the information. The network information may become invalid if a call latency of the network information is too long, affecting a subsequent application-layer optimization solution.

Based on the above technical problem, an embodiment of this disclosure provides a network information exposure method.

FIG. 2 is a schematic flowchart of a network information exposure method according to an embodiment of this disclosure. The method according to the embodiment of FIG. 2 may be performed by an electronic device, and specifically performed by the AF network element in FIG. 1.

As shown in FIG. 2, the method according to this embodiment of this disclosure may include the following steps.

Step S210: Send a wireless network information exposure request to a NEF network element, the wireless network information exposure request carrying category information of target wireless network information, so that the NEF network element transmits the category information to a base station, and the base station acquires the target wireless network information according to the category information and sends the target wireless network information to the NEF network element.

In this embodiment of this disclosure, the base station is an interface device for a mobile device to access the Internet, and refers to a radio transceiver station that transmits information between a mobile communication switching center and a mobile phone terminal in a certain radio coverage area. In the following embodiments, the base station is represented by a radio access network (RAN), but this disclosure is not limited thereto.

In this embodiment of this disclosure, the wireless network information exposure request refers to a request message sent by the AF and used for requesting exposure of wireless network information. The wireless network information requested to be exposed is called target wireless network information. The category information of the target wireless network information carried in the wireless network information exposure request is used for indicating a category to which the requested target wireless network information belongs. That is, the target wireless network information matches the category information.

In an exemplary embodiment, the category information of the target wireless network information may include at least one of packet error ratio (PER) information, access cell information, and average data bit rate information.

In an exemplary embodiment, the wireless network information exposure request may further include a target network slice and/or a target data network name (DNN). Then, in addition to matching the category information, the target wireless network information further belongs to a target quality of service (QoS) flow of a target user equipment (UE) establishing a target session according to the target network slice and/or the target DNN.

In this embodiment of this disclosure, the target network slice and/or the target DNN carried in the wireless network information exposure request may further indicate which specific session(s) the requested target wireless network information is for. The specific session is hereinafter referred to as the target session. The AF may determine the target session through the wireless network information exposure request. The session in this embodiment of this disclosure includes a protocol data unit (PDU) session.

A network slice is used for realizing on-demand networking. In other words, a carrier is allowed to separate a plurality of virtual end-to-end networks on a unified infrastructure and logically or physically isolate each network slice from a RAN, a bearer network, and a core network to adapt to various types of applications. A network slice may be divided into at least three parts, namely a radio network sub-slice, a bearer network sub-slice, and a core network sub-slice.

In this embodiment of this disclosure, the target network slice may be indicated by carrying specific single network slice selection assistance information (S-NSSAI) in the wireless network information exposure request.

The wireless network information exposure request in this embodiment of this disclosure further carries a specific DNN, that is, a target DNN.

In this embodiment of this disclosure, the wireless network information refers to capability information of a wireless side, which may include, for example, PER information, access cell information, average data bit rate information, a transmission latency of a data packet from a UE to a user plane function (UPF) network element, network congestion information, or a real-time user-plane latency, and the like.

In an exemplary embodiment, the wireless network information exposure request may further carry an information reporting manner, and the base station reports the target wireless network information according to the information reporting manner.

In an exemplary embodiment, the wireless network information exposure request may further carry a required information reporting cycle in response to the information reporting manner being periodic reporting, and the base station reports the target wireless network information according to the information reporting cycle in response to the information reporting cycle being satisfied.

In an exemplary embodiment, the wireless network information exposure request may further carry a defined event in response to the information reporting manner being event trigger, and the base station reports the target wireless network information according to the event trigger in response to the defined event being satisfied. The defined event is, for example, a threshold, a number of times of event reporting, or the like.

Step S220: Acquire the target wireless network information returned by the NEF network element.

In an exemplary embodiment, the wireless network information exposure request may further carry request application range information, and the acquiring the target wireless network information returned by the NEF network element specifically includes: receiving, from the NEF network element, the target wireless network information satisfying the request application range information. The request application range information is, for example, a specific UE or UE group, or all UEs, a specific time period, or a specific geographic range, and other information.

In an exemplary embodiment, if the request application range information includes a target UE identity (ID), the receiving, from the NEF network element, the target wireless network information satisfying the request application range information specifically includes: receiving the target wireless network information of a target UE corresponding to the target UE ID. The target UE ID is used for indicating that the wireless network information exposure request applies to a specific UE. The specific UE is called the target UE.

In an exemplary embodiment, if the request application range information includes a target UE group ID, the receiving, from the NEF network element, the target wireless network information satisfying the request application range information specifically includes: receiving the target wireless network information of a target UE in a target UE group corresponding to the target UE group ID. The target UE group ID is used for indicating that the wireless network information exposure request applies to a specific UE group. The specific UE group is called the target UE group. A UE in the specific UE group is called the target UE.

In an exemplary embodiment, if the request application range information includes target time period information, the receiving, from the NEF network element, the target wireless network information satisfying the request application range information specifically includes: receiving the target wireless network information of a target UE satisfying the target time period information.

In an exemplary embodiment, if the request application range information includes target geographic range information, the receiving, from the NEF network element, the target wireless network information satisfying the request application range information specifically includes: receiving the target wireless network information of a target UE within a target geographic range corresponding to the target geographic range information. The target geographic range information is used for indicating that the wireless network information exposure request applies to a specific geographic range. The specific geographic range is called the target geographic range.

In an exemplary embodiment, the acquiring the target wireless network information returned by the NEF network element may include: receiving a RAN exposure information container from the NEF network element, the RAN exposure information container carrying the target wireless network information. The RAN exposure information container is received by the NEF network element from the base station through an AMF network element.

In an exemplary embodiment, the target wireless network information is encapsulated in the RAN exposure information container in a data exchange format or in a code stream manner. The data exchange format may be a JavaScript object notation (JSON) format, which is a lightweight data interchange format.

In this embodiment of this disclosure, functions of the AF, NEF, and AMF network elements, a session management function (SMF) network element, the base station, and the like are enhanced, as illustrated below.

The AF in this embodiment of this disclosure may support requesting the NEF to expose wireless network information of a specific session (called target wireless network information), for example, PER information, access cell information, average data bit rate information, and the like.

Specifically, the AF may send a wireless network information exposure request to the NEF. The wireless network information exposure request may include a specific wireless network information request, a specific network slice (i.e., a target network slice) and/or a specific DNN (i.e., a target DNN), and an information reporting manner (e.g., periodic reporting or event trigger).

The specific wireless network information request may be indicated by a category ID of requested target wireless network information. For example, "1" is used for indicating a request for exposing the PER information, "2" is used for indicating a request for exposing the access cell information, "3" is used for indicating a request for exposing the average data bit rate information, and so on.

In this embodiment of this disclosure, the NEF is used for receiving the wireless network information exposure request sent by the AF. The NEF may take the information either as a monitoring capability or as parameter-type information that a new network can expose, i.e., wireless network information.

The NEF may encapsulate the information into a RAN exposure request container. The RAN exposure request container may include the following information:
category information of target wireless network information requested by the side of the AF, for example, PER information, access cell information, average data bit rate information, and the like; and
an information reporting manner.

In addition, the NEF may also send a subscription request to an SMF to subscribe to a notification message of the SMF. The SMF, in response to establishing a target session corresponding to the target DNN and/or the target network slice, may send a notification message to the NEF to notify the NEF of information of the target UE, which may include, for example, a QoS flow ID (called a target QoS flow ID).

The NEF, after receiving the notification message sent by the SMF, knows that a target session satisfying a condition has been established, and the NEF may send, to the AMF, a RAN exposure request container which is sent by the AMF to the base station through an N2 message.

Whether the target session satisfying the condition has been established may be determined according to information carried in the wireless network information exposure request. For example, the target network slice and/or the target DNN are/is satisfied.

In another example, if the wireless network information exposure request sent by the AF has a specific geographic range restriction, the SMF may send the above notification message to the NEF only in response to a target UE within the specific geographic range establishing the target session satisfying the condition. Then, the NEF may send the RAN exposure request container to an AMF serving the target UE. The AMF transparently transmits the RAN exposure request container to the base station.

In this embodiment of this disclosure, the AMF is used for receiving the RAN exposure request container sent by the NEF, and transparently transmits the RAN exposure request container to a base station serving the target UE.

In this embodiment of this disclosure, the base station is configured to receive the RAN exposure request container sent by the AMF. The base station may set the RAN exposure request container in the target QoS flow of the target UE.

The base station may detect information of the side of the RAN, and send requested target wireless network information to the AMF through an N2 interface in response to a reporting condition being satisfied (e.g., a requirement for an information reporting cycle or a definition of an event is satisfied). The target wireless network information exposed by the RAN may be encapsulated in an RAN exposure information container.

The AMF receives the RAN exposure information container sent by the RAN, and may transparently transmit the RAN exposure information container to the NEF.

In this embodiment of this disclosure, the AF, after receiving the target wireless network information requested to be exposed, may expose the target wireless network information to an application server in real time. The application server may perform corresponding application-layer processing based on the target wireless network information. For example, if the exposed target wireless network information includes network congestion information, a real-time user-plane latency, and the like, resolution of a video may be adjusted, a level of automatic driving may be changed, or the like. That is, an application layer may be optimized.

In this embodiment of this disclosure, the wireless network information exposure request may further carry a capability exposure association ID. The capability exposure association ID is used for associating each wireless network information exposure request with the AF sending the wireless network information exposure request. The NEF, in response to receiving the wireless network information exposure request, may store a mapping relationship between the wireless network information exposure request and the capability exposure association ID. In this way, the NEF, in response to subsequently receiving the target wireless network information returned by the AMF, may find, through the mapping relationship, the AF sending the wireless network information exposure request, so as to return the target wireless network information to the corresponding AF.

For example, the capability exposure association ID may be any one or more of a character string uniquely encoded for each wireless network information exposure request, an AF ID of the AF network element, or an address of the AF, which is not limited in this disclosure.

Based on the network information exposure method according to this implementation of this disclosure, on the one hand, the AF network element sends a wireless network information exposure request to the NEF network element, and the wireless network information exposure request carries category information of target wireless network information, so that the base station can acquire requested target wireless network information based on the category information of the target wireless network information, and then the target wireless network information acquired by the base station is returned, by using the NEF network element, to the AF network element sending the wireless network information exposure request, so as to realize a wireless network information exposure capability. On the other hand, a latency of wireless network information exposure can be reduced, thereby meeting a low-latency requirement of the application-layer processing.

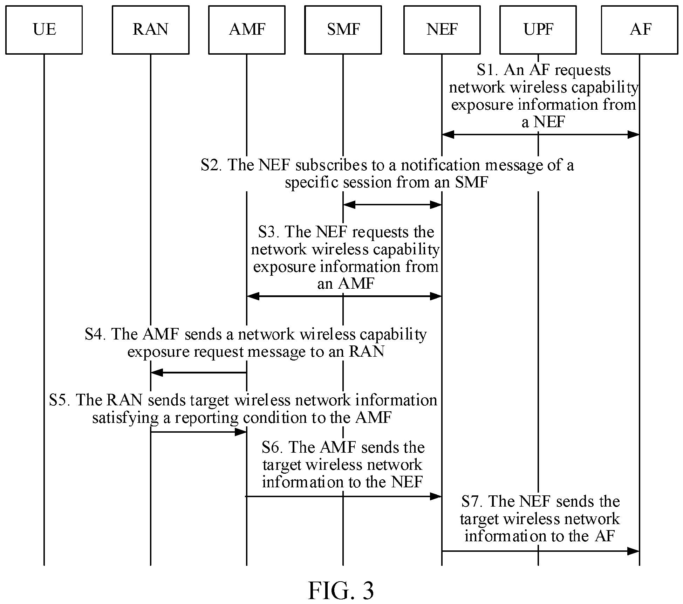

The method according to the above embodiment is illustrated below with reference to FIG. 3.

FIG. 3 is a schematic interaction diagram of a network information exposure method according to an embodiment of this disclosure.

As shown in FIG. 3, in step S 1, an AF requests network wireless capability exposure information (i.e., target wireless network information) from a NEF.

In this embodiment of this disclosure, the AF requests network wireless capability information of a specific session (target session) from the NEF. The AF may send a wireless network information exposure request to the NEF. The wireless network information exposure request may include an AF ID, indication information of specific wireless network information (e.g., category information of target wireless network information), a specific network slice, a specific DNN, an information reporting manner (periodic reporting or event trigger), and the like.

The AF may further indicate an application range of the wireless network information exposure request in the wireless network information exposure request. That is, request application range information is carried, for example, a specific UE, a specific UE group, or all UEs; a specific time period; a specific geographic range, and other information.

In this embodiment of this disclosure, after the NEF receives the wireless network information exposure request sent by the AF, the NEF may authenticate, according to a policy of a carrier and a protocol between the carrier and the AF (called an AF protocol), the wireless network information exposure request sent by the AF. In response to the authentication being successful, the NEF may accept the wireless network information exposure request sent by the AF and return a request acceptance response message to the AF. That is, it is indicated in the returned response message that the wireless network information exposure request is accepted. In response to the authentication failing, the NEF may reject the wireless network information exposure request sent by the AF and return a request rejection response message to the AF. That is, it is indicated in the returned response message that the wireless network information exposure request is rejected, and a rejection reason value may be included.

Step S2: The NEF subscribes to a notification message of a specific session from an SMF.

In this embodiment of this disclosure, the NEF may subscribe to the notification message of the specific session from the SMF according to information carried in the wireless network information exposure request sent by the AF. A subscription request sent by the NEF to the SMF may include the specific DNN or the specific network slice carried in the wireless network information exposure request. Optionally, the subscription request may further include a specific UE ID, or a specific UE group ID, or specific time information, or specific geographic range information.

The subscription request is valid for all UEs in response to the subscription request not including the specific UE ID. The subscription request is valid only for a specific UE or a specific UE group in response to the subscription request including the specific UE ID or specific UE group ID.

In response to the subscription request including the specific time information, the SMF may send a notification message to the NEF only in response to the subscription request being satisfied within a target time period indicated by the specific time information.

In response to the subscription request including the specific geographic range information, the SMF may send the notification message to the NEF only in response to a target UE within a specific geographic range corresponding to the specific geographic range information satisfying the subscription request.

According to the subscription request, the SMF may send the notification message to the NEF in response to the target UE establishing a target session to the specific DNN or the specific network slice and simultaneously meeting other requirements (such as the above specific time information).

In this embodiment of this disclosure, the notification message may include a target UE ID, an AMF ID, a PDU session ID (i.e., a target session ID), a QoS flow ID (i.e., a target QoS flow ID), and the like.

Step S3: The NEF requests the network wireless capability exposure information (i.e., the target wireless network information) from an AMF.

The NEF may encapsulate a wireless network information exposure request received from the AF into a RAN exposure request container, and send the RAN exposure request container, the target UE ID, the PDU session ID, the QoS flow ID, and the like to the AMF.

Step S4: The AMF sends a network wireless capability exposure request message to an RAN.

The AMF may encapsulate the RAN exposure request container, the target UE ID, the PDU session ID, the QoS flow ID, and the like in the network wireless capability exposure request message which is then sent to the base station.

Step S5: The RAN sends target wireless network information satisfying a reporting condition to the AMF.

The base station, after accepting the wireless network information exposure request, may set the RAN exposure request container in the target QoS flow of the target UE. In response to detecting that the reporting condition is satisfied, exposed target wireless network information may be encapsulated in an RAN exposure information container, and the RAN exposure information container is sent to the AMF.

Step S6: The AMF sends the target wireless network information to the NEF.

The AMF, after receiving the RAN exposure information container sent by the RAN, sends the RAN exposure information container to the NEF.

Step S7: The NEF sends the target wireless network information to the AF.

Specifically, the NEF sends the RAN exposure information container to the AF.

Based on the network information exposure method according to this implementation of this disclosure, a specific data packet RAN exposure information container is encapsulated at the base station, target wireless network information that can be exposed is sent to the AMF through the RAN exposure information container and further sent to the NEF through the AMF, and then the RAN exposure information container is sent to the AMF through the NEF, which, on the one hand, can realize exposure of wireless network information, and on the other hand, can reduce a latency of wireless network information exposure and meet a low-latency requirement of application-layer processing.

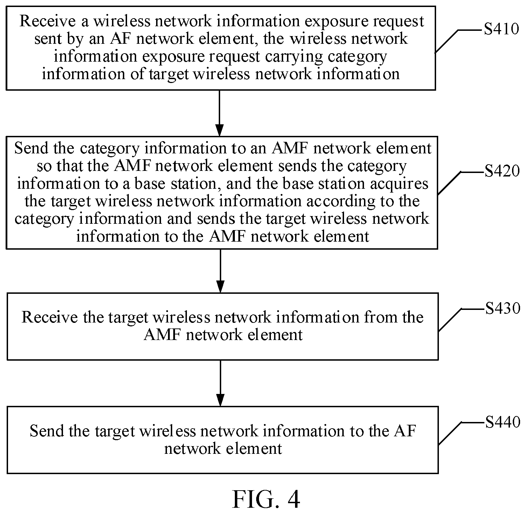

FIG. 4 is a schematic flowchart of a network information exposure method according to another embodiment of this disclosure. The method according to the embodiment of FIG. 4 may be performed by an electronic device, for example, by the NEF network element in FIG. 1.

As shown in FIG. 4, the method according to this embodiment of this disclosure may include the following steps.

Step S410: Receive a wireless network information exposure request sent by an AF network element, the wireless network information exposure request carrying category information of target wireless network information.

Step S420: Send the category information to an AMF network element so that the AMF network element sends the category information to a base station, and the base station acquires the target wireless network information according to the category information and sends the target wireless network information to the AMF network element.

In an exemplary embodiment, the wireless network information exposure request may further include a target network slice and/or a target DNN.

The sending the category information to an AMF network element may include: sending a subscription request to an SMF network element, the subscription request carrying the target network slice and/or the target DNN; receiving a notification message returned by the SMF network element, the notification message carrying a target UE ID, an AMF ID, and a target QoS flow ID that correspond to a target session, the target session being established according to the target network slice and/or the target DNN; and sending the category information, the target UE ID, and the target QoS flow ID to the AMF network element corresponding to the AMF ID.

In an exemplary embodiment, the wireless network information exposure request further carries an information reporting manner.

The sending the category information, the target UE ID, and the target QoS flow ID to the AMF network element corresponding to the AMF ID may include: generating a RAN exposure request container, the RAN exposure request container including the category information and the information reporting manner; and sending the RAN exposure request container, the target UE ID, and the target QoS flow ID to the AMF network element so that the AMF network element sends the RAN exposure request container, the target UE ID, and the target QoS flow ID to the base station.

In an exemplary embodiment, in response to the wireless network information exposure request further carrying request application range information, the subscription request may further carry the request application range information.

The notification message is received from the SMF network element in response to establishment of the target session according to the request application range information.

In an exemplary embodiment, in response to the request application range information including a target UE ID, the notification message is received from the SMF network element in response to establishment of a target session of a target UE corresponding to the target UE ID.

In an exemplary embodiment, in response to the request application range information including a target UE group ID, the notification message is received from the SMF network element in response to establishment of a target session of a target UE in a target UE group corresponding to the target UE group ID.

In an exemplary embodiment, in response to the request application range information including target time period information, the notification message is received from the SMF network element in response to establishment of a target session of a target UE within a target time period corresponding to the target time period information.

In an exemplary embodiment, in response to the request application range information including target geographic range information, the notification message is received from the SMF network element in response to establishment of a target session of a target UE within a target geographic range corresponding to the target geographic range information.

In an exemplary embodiment, the sending a subscription request to an SMF network element may include: authenticating the wireless network information exposure request according to a protocol of the AF network element; and returning, in response to successful authentication of the wireless network information exposure request, a request acceptance response message to the AF network element, and sending the subscription request to the SMF network element.

In an exemplary embodiment, the method may further include: returning, in response to failed authentication of the wireless network information exposure request, a request rejection response message to the AF network element.

Step S430: Receive the target wireless network information from the AMF network element.

In an exemplary embodiment, the receiving the target wireless network information from the AMF network element may include: receiving a RAN exposure information container from the AMF network element, the RAN exposure information container including the target wireless network information.

Step S440: Send the target wireless network information to the AF network element.

In an exemplary embodiment, the sending the target wireless network information to the AF network element may include: forwarding the RAN exposure information container to the AF network element.

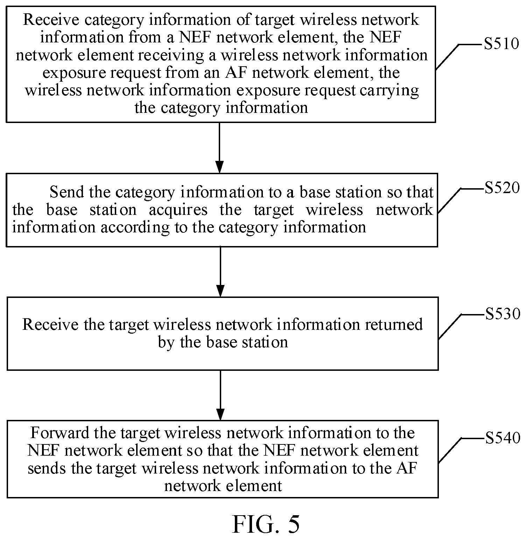

FIG. 5 is a schematic flowchart of a network information exposure method according to yet another embodiment of this disclosure. The method according to the embodiment of FIG. 5 may be performed by an electronic device, for example, by an AMF network element.

As shown in FIG. 5, the method according to this embodiment of this disclosure may include the following steps.

Step S510: Receive category information of target wireless network information from a NEF network element, the NEF network element receiving a wireless network information exposure request from an AF network element, the wireless network information exposure request carrying the category information.

In an exemplary embodiment, the wireless network information exposure request may further carry an information reporting manner.

The receiving category information of target wireless network information from a NEF network element may include: receiving a RAN exposure request container, a target UE ID, and a target QoS flow ID that are transmitted by the NEF network element.

The RAN exposure request container transmitted by the NEF network element includes the category information and the information reporting manner.

Step S520: Send the category information to a base station so that the base station acquires the target wireless network information according to the category information.

In an exemplary embodiment, the sending the category information to a base station may include: sending the RAN exposure request container, the target UE ID, and the target QoS flow ID to the base station so that the base station determines a target QoS flow of a target UE according to the target UE ID and the target QoS flow ID and sets the RAN exposure request container in the target QoS flow.

Step S530: Receive the target wireless network information returned by the base station.

In an exemplary embodiment, the receiving the target wireless network information returned by the base station may include: receiving a RAN exposure information container sent by the base station, the RAN exposure information container including the target wireless network information.

Step S540: Forward the target wireless network information to the NEF network element so that the NEF network element sends the target wireless network information to the AF network element.

In an exemplary embodiment, the forwarding the target wireless network information to the NEF network element may include: forwarding the RAN exposure information container to the NEF network element.

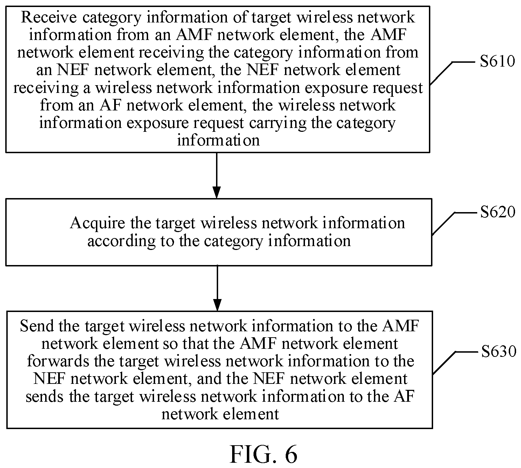

FIG. 6 is a schematic flowchart of a network information exposure method according to another embodiment of this disclosure. The method according to the embodiment of FIG. 6 may be performed by an electronic device, for example, by a base station.

As shown in FIG. 6, the method according to this embodiment of this disclosure may include the following steps.

Step S610: Receive category information of target wireless network information from an AMF network element, the AMF network element receiving the category information from an NEF network element, the NEF network element receiving a wireless network information exposure request from an AF network element, the wireless network information exposure request carrying the category information.

In an exemplary embodiment, the wireless network information exposure request may further carry an information reporting manner.

The receiving category information of target wireless network information from an AMF network element may include: receiving a RAN exposure request container, a target UE ID, and a target QoS flow ID from the AMF network element, where the RAN exposure request container includes the category information and the information reporting manner.

Step S620: Acquire the target wireless network information according to the category information.

In an exemplary embodiment, the acquiring the target wireless network information according to the category information may include: determining a target QoS flow of a target UE according to the target UE ID and the target QoS flow ID, and setting the RAN exposure request container in the target QoS flow, so as to detect RAN-side information of the target UE and acquire the target wireless network information matching the category information.

Step S630: Send the target wireless network information to the AMF network element so that the AMF network element forwards the target wireless network information to the NEF network element, and the NEF network element sends the target wireless network information to the AF network element.

In an exemplary embodiment, the sending the target wireless network information to the AMF network element may include: encapsulating the target wireless network information in a RAN exposure information container in response to the information reporting manner being satisfied; and sending the RAN exposure information container to the AMF network element so that the AMF network element sends the RAN exposure information container to the NEF network element.

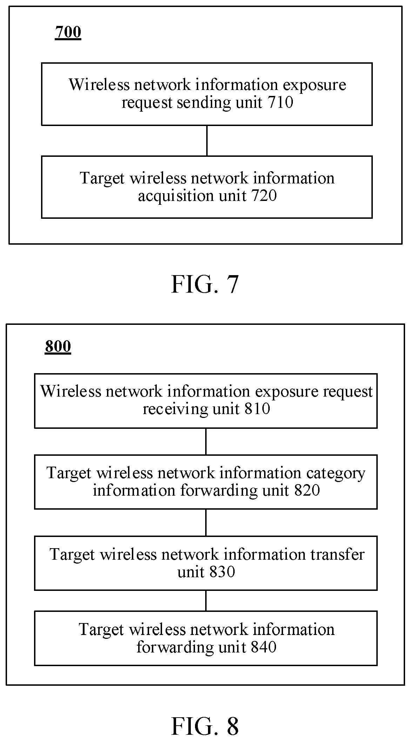

FIG. 7 is a schematic block diagram of a network information exposure apparatus according to an embodiment of this disclosure. The network information exposure apparatus is an AF network element, or the network information exposure apparatus is applied to an AF network element. As shown in FIG. 7, the network information exposure apparatus 700 according to this embodiment of this disclosure may include: a wireless network information exposure request sending unit 710 and a target wireless network information acquisition unit 720.

The wireless network information exposure request sending unit 710 is configured to send a wireless network information exposure request to a NEF network element, the wireless network information exposure request carrying category information of target wireless network information, so that the NEF network element transmits the category information to a base station, and the base station acquires the target wireless network information according to the category information and sends the target wireless network information to the NEF network element.

The target wireless network information acquisition unit 720 is configured to acquire the target wireless network information returned by the NEF network element.

In an exemplary embodiment, the wireless network information exposure request may further include a target network slice and/or a target DNN, the target wireless network information matches the category information, and the target wireless network information belongs to a target QoS flow of a target UE establishing a target session according to the target network slice and/or the target DNN.

In an exemplary embodiment, the category information of the target wireless network information may include at least one of PER information, access cell information, and average data bit rate information.

In an exemplary embodiment, the wireless network information exposure request may further carry an information reporting manner, and the base station reports the target wireless network information according to the information reporting manner.

In an exemplary embodiment, the wireless network information exposure request further carries an information reporting cycle in response to the information reporting manner being periodic reporting, and the base station reports the target wireless network information according to the information reporting cycle.

In an exemplary embodiment, the wireless network information exposure request further carries an event in response to the information reporting manner being event trigger, and the base station reports the target wireless network information according to the event trigger.

In an exemplary embodiment, the wireless network information exposure request may further carry request application range information, and the acquiring the target wireless network information returned by the NEF network element includes:
receiving, from the NEF network element, the target wireless network information satisfying the request application range information.

In an exemplary embodiment, the request application range information includes a target UE ID, and the receiving, from the NEF network element, the target wireless network information satisfying the request application range information includes:

receiving the target wireless network information of a target UE corresponding to the target UE ID.

In an exemplary embodiment, the request application range information includes a target UE group ID, and the receiving, from the NEF network element, the target wireless network information satisfying the request application range information includes:
receiving the target wireless network information of a target UE in a target UE group corresponding to the target UE group ID.

In an exemplary embodiment, the request application range information includes target time period information, and the receiving, from the NEF network element, the target wireless network information satisfying the request application range information includes:
receiving the target wireless network information of a target UE satisfying the target time period information.

In an exemplary embodiment, the request application range information includes target geographic range information, and the receiving, from the NEF network element, the target wireless network information satisfying the request application range information includes:
receiving the target wireless network information of a target UE within a target geographic range corresponding to the target geographic range information.

In an exemplary embodiment, the target wireless network information acquisition unit 720 includes: a RAN exposure information container determining unit configured to receive a RAN exposure information container from the NEF network element, the RAN exposure information container carrying the target wireless network information. The RAN exposure information container is received by the NEF network element from the base station through an AMF network element.

In an exemplary embodiment, the target wireless network information is encapsulated in the RAN exposure information container in a data exchange format or in a code stream manner.

Specific implementation of each unit in the AF network element according to this embodiment of this disclosure may be determined with reference to the content in the above network information exposure method. Details are not described herein again.

FIG. 8 is a schematic block diagram of a network information exposure apparatus according to another embodiment of this disclosure. The network information exposure apparatus is a NEF network element, or the network information exposure apparatus is applied to a NEF network element. As shown in FIG. 8, the network information exposure apparatus 800 according to this embodiment of this disclosure may include a wireless network information exposure request receiving unit 810, a target wireless network information category information forwarding unit 820, a target wireless network information transfer unit 830, and a target wireless network information forwarding unit 840.

The wireless network information exposure request receiving unit 810 is configured to receive a wireless network information exposure request sent by an AF network element, the wireless network information exposure request carrying category information of target wireless network information.

The target wireless network information category information forwarding unit 820 is configured to send the category information to an AMF network element so that the AMF network element sends the category information to a base station, and the base station acquires the target wireless network information according to the category information and sends the target wireless network information to the AMF network element.

The target wireless network information transfer unit 830 is configured to receive the target wireless network information from the AMF network element.

The target wireless network information forwarding unit 840 is configured to send the target wireless network information to the AF network element.

In an exemplary embodiment, the wireless network information exposure request may further include a target network slice and/or a target DNN.

The target wireless network information category information forwarding unit 820 may include:
a subscription request sending unit configured to send a subscription request to an SMF network element, the subscription request carrying the target network slice and/or the target DNN;
a notification message receiving unit configured to receive a notification message returned by the SMF network element, the notification message carrying a target UE ID, an AMF ID, and a target QoS flow ID that correspond to a target session, the target session being established according to the target network slice and/or the target DNN; and
a target UE information sending unit configured to send the category information, the target UE ID, and the target QoS flow ID to the AMF network element corresponding to the AMF ID.

In an exemplary embodiment, the wireless network information exposure request may further carry an information reporting manner.

The target UE information sending unit may include:
a RAN exposure request container generation unit configured to generate a RAN exposure request container, the RAN exposure request container including the category information and the information reporting manner; and
a RAN exposure request container sending unit configured to send the RAN exposure request container, the target UE ID, and the target QoS flow ID to the AMF network element so that the AMF network element sends the RAN exposure request container, the target UE ID, and the target QoS flow ID to the base station.

In an exemplary embodiment, in response to the wireless network information exposure request further carrying request application range information, the subscription request may further carry the request application range information.

The notification message is received from the SMF network element in response to establishment of the target session according to the request application range information.

In an exemplary embodiment, in response to the request application range information including a target UE ID, the notification message is received from the SMF network element in response to establishment of a target session of a target UE corresponding to the target UE ID.

In an exemplary embodiment, in response to the request application range information including a target UE group ID, the notification message is received from the SMF network element in response to establishment of a target session of a target UE in a target UE group corresponding to the target UE group ID.

In an exemplary embodiment, in response to the request application range information including target time period information, the notification message is received from the SMF network element in response to establishment of a target session of a target UE within a target time period corresponding to the target time period information.

In an exemplary embodiment, in response to the request application range information including target geographic range information, the notification message is received from the SMF network element in response to establishment of a target session of a target UE within a target geographic range corresponding to the target geographic range information.

In an exemplary embodiment, the subscription request sending unit may include:
a request authentication unit configured to authenticate the wireless network information exposure request according to a protocol of the AF network element;
a request acceptance unit configured to return, in response to successful authentication of the wireless network information exposure request, a request acceptance response message to the AF network element; and
a subscription request transmission unit configured to send the subscription request to the SMF network element.

In an exemplary embodiment, the network information exposure apparatus 800 may further include:
a request rejection unit configured to return, in response to failed authentication of the wireless network information exposure request, a request rejection response message to the AF network element.

In an exemplary embodiment, the target wireless network information transfer unit 830 may be configured to receive a RAN exposure information container from the AMF network element, and the RAN exposure information container may include the target wireless network information.

In an exemplary embodiment, the target wireless network information forwarding unit 840 may be configured to forward the RAN exposure information container to the AF network element.

Specific implementation of each unit in the NEF network element according to this embodiment of this disclosure may be determined with reference to the content in the above network information exposure method. Details are not described herein again.

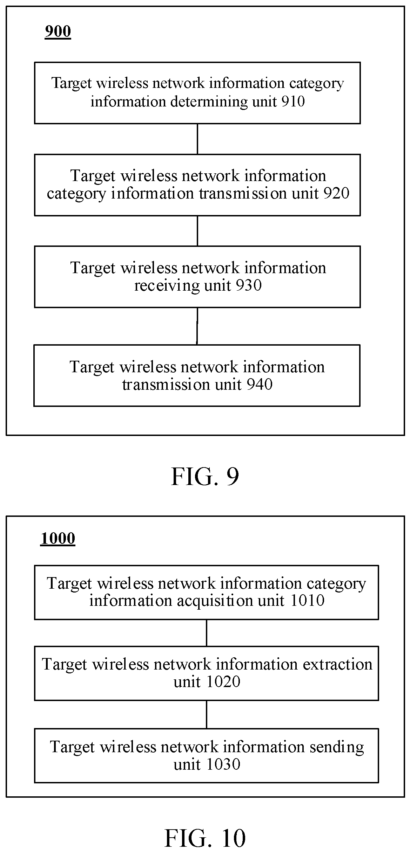

FIG. 9 is a schematic block diagram of a network information exposure apparatus according to yet another embodiment of this disclosure. The network information exposure apparatus is an AMF network element, or the network information exposure apparatus is applied to an AMF network element. As shown in FIG. 9, the network information exposure apparatus 900 according to this embodiment of this disclosure may include a target wireless network information category information determining unit 910, a target wireless network information category information transmission unit 920, a target wireless network information receiving unit 930, and a target wireless network information transmission unit 940.

The target wireless network information category information determining unit 910 is configured to receive category information of target wireless network information from a NEF network element. The NEF network element receives a wireless network information exposure request from an AF network element, and the wireless network information exposure request carries the category information.

The target wireless network information category information transmission unit 920 is configured to send the category information to a base station so that the base station acquires the target wireless network information according to the category information.

The target wireless network information receiving unit 930 is configured to receive the target wireless network information returned by the base station.

The target wireless network information transmission unit 940 is configured to forward the target wireless network information to the NEF network element so that the NEF network element sends the target wireless network information to the AF network element.

In an exemplary embodiment, the wireless network information exposure request may further carry an information reporting manner.

The target wireless network information category information determining unit 910 may include:
a RAN exposure request container receiving unit configured to receive a RAN exposure request container, a target UE ID, and a target QoS flow ID from the AMF network element. The RAN exposure request container includes the category information and the information reporting manner.

In an exemplary embodiment, the target wireless network information category information transmission unit 920 may include:
a RAN exposure request container forwarding unit configured to send the RAN exposure request container, the target UE ID, and the target QoS flow ID to the base station so that the base station determines a target QoS flow of a target UE according to the target UE ID and the target QoS flow ID and sets the RAN exposure request container in the target QoS flow.

In an exemplary embodiment, the target wireless network information receiving unit 930 may be configured to receive a RAN exposure information container sent by the base station, and the RAN exposure information container includes the target wireless network information.

In an exemplary embodiment, the target wireless network information transmission unit 940 may be configured to forward the RAN exposure information container to the NEF network element.

Specific implementation of each unit in the AMF network element according to this embodiment of this disclosure may be determined with reference to the content in the above network information exposure method. Details are not described herein again.

FIG. 10 is a schematic block diagram of a network information exposure apparatus according to another embodiment of this disclosure. The network information exposure apparatus is a base station, or the network information exposure apparatus is applied to a base station. As shown in FIG. 10, the network information exposure apparatus 1000 according to this embodiment of this disclosure may include a target wireless network information category information acquisition unit 1010, a target wireless network information extraction unit 1020, and a target wireless network information sending unit 1030.

The target wireless network information category information acquisition unit 1010 is configured to receive category information of target wireless network information from an AMF network element. The AMF network element receives the category information from an NEF network element. The NEF network element receives a wireless network information exposure request from an AF network element. The wireless network information exposure request carries the category information.

The target wireless network information extraction unit 1020 is configured to acquire the target wireless network information according to the category information of the target wireless network information.

The target wireless network information sending unit 1030 is configured to send the target wireless network information to the AMF network element so that the AMF network element forwards the target wireless network information to the NEF network element, and the NEF network element sends the target wireless network information to the AF network element. In an exemplary embodiment, the wireless network information exposure request may further carry an information reporting manner.

The target wireless network information category information acquisition unit 1010 may include:
a target UE related information determining unit configured to receive a RAN exposure request container, a target UE ID, and a target QoS flow ID from the AMF network element. The RAN exposure request container includes the category information and the information reporting manner.

In an exemplary embodiment, the target wireless network information extraction unit 1020 may include:
a RAN exposure request container setting unit configured to determine a target QoS flow of a target UE according to the target UE ID and the target QoS flow ID, and set the RAN exposure request container in the target QoS flow, so as to detect RAN-side information of the target UE and acquire the target wireless network information matching the category information.

In an exemplary embodiment, the target wireless network information sending unit 1030 may include:
a target wireless network information encapsulation unit configured to encapsulate the target wireless network information in a RAN exposure information container in response to the information reporting manner being satisfied; and send the RAN exposure information container to the AMF network element so that the AMF network element sends the RAN exposure information container to the NEF network element.

Specific implementation of each unit in the base station according to this embodiment of this disclosure may be determined with reference to the content in the above network information exposure method. Details are not described herein again.

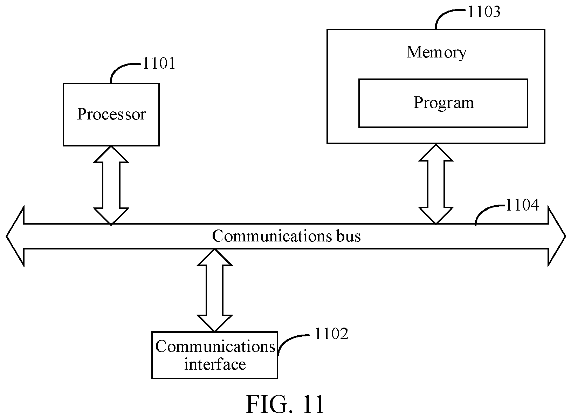

Refer to FIG. 11 below which is a schematic structural diagram of an electronic device adapted to implement an embodiment of this disclosure. The electronic device shown in FIG. 11 is merely an example, and does not constitute any limitation on functions and use ranges of the embodiments of this disclosure. The electronic device in FIG. 11 may include an offline server and a service server.

Referring to FIG. 11, the electronic device according to this embodiment of this disclosure may include: a processor 1101, a communications interface 1102, a memory 1103, and a communications bus 1104.

Communication among the processor 1101, the communications interface 1102, and the memory 1103 is implemented through the communications bus 1104.

Optionally, the communications interface 1102 may be an interface of a communications module, such as an interface of a global system for mobile communications (GSM) module. The processor 1101 is configured to execute a program. The memory 1103 is configured to store the program. The program may include a computer program, and the computer program includes a computer operating instruction. The program may include: a program of a video client.

The processor 1101 may be a central processing unit (CPU) or an application-specific integrated circuit (ASIC), or may be one or more integrated circuits configured to implement the embodiments of this disclosure.

The memory 1103 may include a high-speed RAM memory, and may further include a non-volatile memory, for example, at least one magnetic disk memory.

The program may be specifically used for: sending a wireless network information exposure request to a NEF network element, the wireless network information exposure request carrying category information of target wireless network information, so that the NEF network element transmits the category information to a base station, and the base station acquires the target wireless network information according to the category information and sends the target wireless network information to the NEF network element; and acquiring the target wireless network information returned by the NEF network element.

Alternatively, the program may be specifically used for: receiving a wireless network information exposure request sent by an AF network element, the wireless network information exposure request carrying category information of target wireless network information; sending the category information to an AMF network element so that the AMF network element sends the category information to a base station, and the base station acquires the target wireless network information according to the category information and sends the target wireless network information to the AMF network element; receiving the target wireless network information from the AMF network element; and sending the target wireless network information to the AF network element.

Alternatively, the program may be specifically used for: receiving category information of target wireless network information from a NEF network element, the NEF network element receiving a wireless network information exposure request from an AF network element, the wireless network information exposure request carrying the category information; sending the category information to a base station so that the base station acquires the target wireless network information according to the category information; receiving the target wireless network information returned by the base station; and forwarding the target wireless network information to the NEF network element so that the NEF network element sends the target wireless network information to the AF network element.

Alternatively, the program may be specifically used for: receiving category information of target wireless network information from an AMF network element, the AMF network element receiving the category information from an NEF network element, the NEF network element receiving a wireless network information exposure request from an AF network element, the wireless network information exposure request carrying the category information; acquiring the target wireless network information according to the category information; and sending the target wireless network information to the AMF network element so that the AMF network element forwards the target wireless network information to the NEF network element, and the NEF network element sends the target wireless network information to the AF network element.

Although a plurality of units of a device configured to perform actions are discussed in the foregoing detailed description, such division is not mandatory. Actually, according to the implementations of this disclosure, the features and functions of two or more units described above may be specifically implemented in one unit. On the contrary, the features and functions of one unit described above may be further divided to be embodied by a plurality of units.

According to the foregoing descriptions of the implementations, a person skilled in the art may readily understand that the exemplary implementations described herein may be implemented by using software, or may be implemented by combining software and necessary hardware. Therefore, the technical solutions of the embodiments of this disclosure may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a touch terminal, a network device, or the like) to perform the methods according to the implementations of this disclosure.

After considering the specification and practicing the present disclosure, a person skilled in the art may easily conceive of other implementation solutions of this disclosure. This disclosure is intended to cover any variations, uses, or adaptive changes of this disclosure. These variations, uses, or adaptive changes follow the general principles of this disclosure and include common general knowledge or common technical means in the art, which are not disclosed in this disclosure. The specification and the embodiments are considered as merely exemplary, and the real scope and spirit of this disclosure are pointed out in the following claims.

It is to be understood that this disclosure is not limited to the precise structures described above and shown in the accompanying drawings, and various modifications and changes can be made without departing from the scope of this disclosure. The scope of this disclosure is defined only by the appended claims.

## Claims

1. A network information exposure method, performed by an electronic device, the method comprising:
sending a wireless network information exposure request to a network exposure function (NEF) network element, the wireless network information exposure request carrying category information of target wireless network information, so that the NEF network element transmits the category information to a base station, and the base station acquires the target wireless network information according to the category information and sends the target wireless network information to the NEF network element; and
acquiring the target wireless network information returned by the NEF network element.

2. The method according to claim 1, wherein the wireless network information exposure request further comprises a target network slice and/or a target data network name (DNN), and the target wireless network information belongs to a target quality of service (QoS) flow of a target user equipment (UE) establishing a target session according to the target network slice and/or the target DNN.

3. The method according to claim 1, wherein the category information comprises at least one of packet error ratio (PER) information, access cell information, and average data bit rate information.

4. The method according to claim 1, wherein the wireless network information exposure request further carries an information reporting manner, and the base station reports the target wireless network information according to the information reporting manner.

5. The method according to claim 4, wherein the wireless network information exposure request further carries an information reporting cycle in response to the information reporting manner being periodic reporting, and the base station reports the target wireless network information according to the information reporting cycle.

6. The method according to claim 4, wherein the wireless network information exposure request further carries an event in response to the information reporting manner being event trigger, and the base station reports the target wireless network information according to the event trigger.

7. The method according to claim 1, wherein the wireless network information exposure request further carries request application range information, and the acquiring the target wireless network information returned by the NEF network element comprises:
receiving, from the NEF network element, the target wireless network information satisfying the request application range information.

8. The method according to claim 7, wherein the request application range information comprises a target UE identity (ID), and the receiving, from the NEF network element, the target wireless network information satisfying the request application range information comprises:
receiving the target wireless network information of a target UE corresponding to the target UE ID.

9. The method according to claim 7, wherein the request application range information comprises a target UE group ID, and the receiving, from the NEF network element, the target wireless network information satisfying the request application range information comprises:
receiving the target wireless network information of a target UE in a target UE group corresponding to the target UE group ID.

10. The method according to claim 7, wherein the request application range information comprises target time period information, and the receiving, from the NEF network element, the target wireless network information satisfying the request application range information comprises:
receiving the target wireless network information of a target UE satisfying the target time period information.

11. The method according to claim 7, wherein the request application range information comprises target geographic range information, and the receiving, from the NEF network element, the target wireless network information satisfying the request application range information comprises:
receiving the target wireless network information of a target UE within a target geographic range corresponding to the target geographic range information.

12. The method according to claim 1, wherein the acquiring the target wireless network information returned by the NEF network element comprises:
receiving a radio access network (RAN) exposure information container from the NEF network element, the RAN exposure information container carrying the target wireless network information, wherein the RAN exposure information container is received by the NEF network element from the base station through an access and mobility management function (AMF) network element.

13. The method according to claim 12, wherein the target wireless network information is encapsulated in the RAN exposure information container in a data exchange format or in a code stream manner.

14. A network information exposure method, performed by an electronic device, the method comprising:
receiving a wireless network information exposure request sent by an application function (AF) network element, the wireless network information exposure request carrying category information of target wireless network information;
sending the category information to an AMF network element so that the AMF network element sends the category information to a base station, and the base station acquires the target wireless network information according to the category information and sends the target wireless network information to the AMF network element;
receiving the target wireless network information from the AMF network element; and
sending the target wireless network information to the AF network element.

15. The method according to claim 14, wherein the wireless network information exposure request further comprises a target network slice and/or a target DNN; wherein the sending the category information to an AMF network element comprises:
sending a subscription request to a session management function (SMF) network element, the subscription request carrying the target network slice and/or the target DNN;
receiving a notification message returned by the SMF network element, the notification message carrying a target UE ID, an AMF ID, and a target QoS flow ID that correspond to a target session, the target session being established according to the target network slice and/or the target DNN; and
sending the category information, the target UE ID, and the target QoS flow ID to the AMF network element corresponding to the AMF ID.

16. The method according to claim 15, wherein the wireless network information exposure request further carries an information reporting manner; wherein the sending the category information, the target UE ID, and the target QoS flow ID to the AMF network element corresponding to the AMF ID comprises:
generating a RAN exposure request container, the RAN exposure request container comprising the category information and the information reporting manner; and
sending the RAN exposure request container, the target UE ID, and the target QoS flow ID to the AMF network element so that the AMF network element sends the RAN exposure request container, the target UE ID, and the target QoS flow ID to the base station.

17. The method according to claim 15, wherein in response to the wireless network information exposure request further carrying request application range information, the subscription request further carries the request application range information;
wherein the notification message is received from the SMF network element in response to establishment of the target session according to the request application range information.

18. The method according to claim 17, wherein in response to the request application range information comprising a target UE ID, the notification message is received from the SMF network element in response to establishment of a target session of a target UE corresponding to the target UE ID.

19. The method according to claim 17, wherein in response to the request application range information comprising a target UE group ID, the notification message is received from the SMF network element in response to establishment of a target session of a target UE in a target UE group corresponding to the target UE group ID.

20. The method according to claim 17, wherein in response to the request application range information comprising target time period information, the notification message is received from the SMF network element in response to establishment of a target session of a target UE within a target time period corresponding to the target time period information.

21. The method according to claim 17, wherein in response to the request application range information comprising target geographic range information, the notification message is received from the SMF network element in response to establishment of a target session of a target UE within a target geographic range corresponding to the target geographic range information.

22. The method according to claim 15, wherein the sending a subscription request to an SMF network element comprises:
authenticating the wireless network information exposure request according to a protocol of the AF network element; and
returning, in response to successful authentication of the wireless network information exposure request, a request acceptance response message to the AF network element, and sending the subscription request to the SMF network element.

23. The method according to claim 22, further comprising:
returning, in response to failed authentication of the wireless network information exposure request, a request rejection response message to the AF network element.

24. The method according to claim 14, wherein the receiving the target wireless network information from the AMF network element comprises:
receiving a RAN exposure information container from the AMF network element, the RAN exposure information container comprising the target wireless network information;
wherein the sending the target wireless network information to the AF network element comprises:
forwarding the RAN exposure information container to the AF network element.

25. A network information exposure method, performed by an electronic device, the method comprising:
receiving category information of target wireless network information from a NEF network element, the NEF network element receiving a wireless network information exposure request from an AF network element, the wireless network information exposure request carrying the category information;
sending the category information to a base station so that the base station acquires the target wireless network information according to the category information;
receiving the target wireless network information returned by the base station; and
forwarding the target wireless network information to the NEF network element so that the NEF network element sends the target wireless network information to the AF network element.

26. The method according to claim 25, wherein the wireless network information exposure request further carries an information reporting manner; and the receiving category information of target wireless network information from a NEF network element comprises:
receiving a RAN exposure request container, a target UE ID, and a target QoS flow ID that are sent by the NEF network element, wherein the RAN exposure request container comprises the category information and the information reporting manner;
wherein the sending the category information to a base station comprises:
sending the RAN exposure request container, the target UE ID, and the target QoS flow ID to the base station so that the base station determines a target QoS flow of a target UE according to the target UE ID and the target QoS flow ID and sets the RAN exposure request container in the target QoS flow.

27. The method according to claim 25, wherein the receiving the target wireless network information returned by the base station comprises:
receiving a RAN exposure information container transmitted by the base station, the RAN exposure information container comprising the target wireless network information;
wherein the forwarding the target wireless network information to the NEF network element comprises:
forwarding the RAN exposure information container to the NEF network element.

28. A network information exposure method, performed by an electronic device, the method comprising:
receiving category information of target wireless network information from an AMF network element, the AMF network element receiving the category information from an NEF network element, the NEF network element receiving a wireless network information exposure request from an AF network element, the wireless network information exposure request carrying the category information;
acquiring the target wireless network information according to the category information; and
sending the target wireless network information to the AMF network element so that the AMF network element forwards the target wireless network information to the NEF network element, and the NEF network element sends the target wireless network information to the AF network element.

29. The method according to claim 28, wherein the wireless network information exposure request further carries an information reporting manner; and the receiving category information of target wireless network information from an AMF network element comprises:
receiving a RAN exposure request container, a target UE ID, and a target QoS flow ID from the AMF network element, wherein the RAN exposure request container comprises the category information and the information reporting manner;
wherein the acquiring the target wireless network information according to the category information comprises:
determining a target QoS flow of a target UE according to the target UE ID and the target QoS flow ID, and setting the RAN exposure request container in the target QoS flow, so as to detect RAN-side information of the target UE and acquire the target wireless network information matching the category information.

30. The method according to claim 29, wherein the sending the target wireless network information to the AMF network element comprises:
encapsulating the target wireless network information in a RAN exposure information container in response to the information reporting manner being satisfied; and
sending the RAN exposure information container to the AMF network element so that the AMF network element sends the RAN exposure information container to the NEF network element.

31. A network information exposure apparatus, comprising:
a wireless network information exposure request sending unit configured to send a wireless network information exposure request to a NEF network element, the wireless network information exposure request carrying category information of target wireless network information, so that the NEF network element transmits the category information to a base station, and the base station acquires the target wireless network information according to the category information and sends the target wireless network information to the NEF network element; and
a target wireless network information acquisition unit configured to acquire the target wireless network information returned by the NEF network element.

32. A network information exposure apparatus, comprising:
a wireless network information exposure request receiving unit configured to receive a wireless network information exposure request sent by an AF network element, the wireless network information exposure request carrying category information of target wireless network information;
a target wireless network information category information forwarding unit configured to send the category information to an AMF network element so that the AMF network element sends the category information to a base station, and the base station acquires the target wireless network information according to the category information and sends the target wireless network information to the AMF network element;
a target wireless network information transfer unit configured to receive the target wireless network information from the AMF network element; and
a target wireless network information forwarding unit configured to send the target wireless network information to the AF network element.

33. A network information exposure apparatus, comprising:
a target wireless network information category information determining unit configured to receive category information of target wireless network information from a NEF network element, the NEF network element receiving a wireless network information exposure request from an AF network element, the wireless network information exposure request carrying the category information;
a target wireless network information category information transmission unit configured to send the category information to a base station so that the base station acquires the target wireless network information according to the category information;
a target wireless network information receiving unit configured to receive the target wireless network information returned by the base station; and
a target wireless network information transmission unit configured to forward the target wireless network information to the NEF network element so that the NEF network element sends the target wireless network information to the AF network element.

34. A network information exposure apparatus, comprising:
a target wireless network information category information acquisition unit configured to receive category information of target wireless network information from an AMF network element, the AMF network element receiving the category information from an NEF network element, the NEF network element receiving a wireless network information exposure request from an AF network element, the wireless network information exposure request carrying the category information;
a target wireless network information extraction unit configured to acquire the target wireless network information according to the category information; and
a target wireless network information sending unit configured to send the target wireless network information to the AMF network element so that the AMF network element forwards the target wireless network information to the NEF network element, and the NEF network element sends the target wireless network information to the AF network element.

35. An electronic device, comprising:
one or more processors; and
a storage apparatus configured to store one or more programs, the one or more programs, when executed by the one or more processors, causing the electronic device to implement the method according to any one of claims 1 to 13, or the method according to any one of claims 14 to 24, or the method according to any one of claims 25 to 27, or the method according to any one of claims 28 to 30.

36. A computer-readable storage medium, the computer-readable storage medium storing a computer program, the computer program, when executed by a processor, implementing the method according to any one of claims 1 to 13, or the method according to any one of claims 14 to 24, or the method according to any one of claims 25 to 27, or the method according to any one of claims 28 to 30.
